# EUROPÄISCHE PATENTANMELDUNG

(11) **EP 2 642 268 A2**
(43) Veröffentlichungstag der Anmeldung: **25.09.2013**
(21) Anmeldenummer: 13160078.5
(22) Anmeldetag: 20.03.2013
(51) Int. Cl.: G01M 3/28

(54) **Einrichtung und Verfahren zur Überwachung der Dichtigkeit von druckluftverbrauchenden oder druckluftführenden pneumatischen Elementen**

(30) Priorität: 20.03.2012 DE 102012005703; 21.05.2012 DE 102012010055
(71) Anmelder: HyPneu Service GmbH, 09116 Chemnitz (DE)
(72) Erfinder: Havlicek, Marek, 09125 Chemnitz (DE); Zipplies, Eberhard, 09120 Chemnitz (DE); Scheffer, Sten, 09123 Chemnitz (DE)
(74) Vertreter: Kruspig, Volkmar

(57) **Zusammenfassung**

Die Erfindung betrifft eine Einrichtung und ein Verfahren zur Überwachung der Dichtigkeit von druckluftverbrauchenden oder druckluftführenden pneumatischen Elementen wie Druckluftzylinder, Druckluftmotoren, Pneumatikventile, Verbindungsteile, Druckluftrohre und -schläuche oder dergleichen mit mindestens einem Strömungswächter und einem diesem zugeordneten Signalgeber. Erfindungsgemäß wird der mindestens eine Strömungswächter als Sensor-Rückschlagventil ausgebildet und zwischen Druckluftquelle und Druckluftverbraucher volumenstromdurchlassend angeordnet, wobei dem Sensor-Rückschlagventil ein ebenfalls als Rückschlagventil ausgeführtes Umgehungsventil strömungsseitig antiparallel derart geschaltet ist, dass beim Zuschalten des Druckluftverbrauchers mit Aufbau des Volumenstroms das Sensor-Rückschlagventil öffnet und ein Sensorsignalfluss unterbrochen wird, am Ende des Druckluftverbrauchszyklus das Sensor-Rückschlagventil schließt, wodurch der Sensorsignalfluss wieder hergestellt ist, wobei im Fall einer Leckage am oder im Druckluftverbraucher durch fortgesetzten DruckluftVolumenstrom der Sensorsignalfluss unterbrochen bleibt und weiterhin im Rückhubabschnitt des Druckluftverbrauchszyklus das Umgehungsventil geöffnet und das Sensor-Rückschlagventil geschlossen ist.

## Beschreibung

Die Erfindung betrifft eine Einrichtung und ein Verfahren zur Überwachung der Dichtigkeit von druckluftverbrauchenden oder druckluftführenden pneumatischen Elementen wie Druckluftzylinder, Druckluftmotoren, Pneumatikventile, Verbindungsteile, Druckluftrohre und Druckluftschläuche oder dergleichen mit mindestens einem Strömungswächter und einem diesem zugeordneten Signalgeber gemäß Anspruch 1.

Aus der DE 20 2007 016 790 U1 ist eine Strömungs-Überwachungseinheit vorbekannt, die als Leitungszwischenstück ausgebildet ist. Das Leitungszwischenstück wird in eine Öl-Luft-Leitung eingebracht und weist einen durchsichtigen Wandabschnitt auf.

Mit Hilfe der Überwachungseinheit kann überprüft werden, ob eine Luftströmung vorliegt. Dies geschieht durch eine einfache optische Kontrolle der Strömung mittels des durchsichtigen Wandabschnitts. Hier können Strömungslinien, Wirbel, Luft- bzw. Gaseinschlüsse oder dergleichen beobachtet werden. Darüber hinaus kann die Bewegung in Strömungsrichtung beobachtet werden, so dass eine einfache visuelle Kontrolle möglich ist, ob das in der Leitung transportierte Öl-Luft-Gemisch bestimmungsgemäß transportiert wird oder ob überhaupt eine Volumenströmung vorliegt. Hierdurch kann auch auf Undichtigkeiten eines nachgeordneten Systems geschlussfolgert werden.

Bei der gattungsbildenden Einrichtung zur Dichtigkeitsüberwachung eines mit einem Druckmedium befüllbaren Dichtungselements nach DE 203 19 447 U1 wird das eigentliche Dichtungselement über eine Befüllleitung von einer Druckquelle versorgt. Parallel zur Befüllleitung ist eine Überwachungsleitung vorhanden, wobei in der Überwachungsleitung ein Strömungswächter angeordnet ist und der Strömungswächter einen Signalschalter umfasst, der bei festgestellter Durchströmung des Strömungswächters ein Signal ausgibt. Zwischen dem Strömungswächter und dem Druckraum ist ausgestaltend ein Rückschlagventil derart angeordnet, dass eine Rückströmung des Druckmediums aus dem Druckraum des Dichtungselements in die Überwachungsleitung verhinderbar ist.

Das Grundprinzip nach DE 203 19 447 U1 besteht also darin, die Detektion eines schadhaften mit einem Druckmedium zu befüllenden Dichtungselements über eine Strömungsmessung in einer separaten, parallel zu der eigentlichen Befüllleitung geführten Überwachungsleitung durchzuführen. Hierfür wird die Befüllleitung von dem Druckraum des Dichtungselements getrennt und mit dem erwähnten Strömungswächter festgestellt, ob Druckmedium aus der Druckquelle in die Überwachungsleitung in den Druckraum des Dichtungselements strömt. Wenn dies der Fall ist, muss der Druckraum des Dichtungselements undicht sein bzw. das Dichtungselement selbst ist defekt. Durch die Überwachungsleitung kann in einem solchen Fall weiterhin Druckmedium in den Druckraum des Dichtungselements strömen, so dass der Druck im Druckraum und damit die Dichtfunktion weitgehend aufrechterhalten bleibt. Wird ein Strom des Druckmediums in der Überwachungsleitung festgestellt, gibt der Signalschalter ein Signal aus, welches zur Meldung des festgestellten Defekts genutzt werden kann. Bei einer Ausführungsform nach DE 203 19 447 U1 wird zunächst der Druckraum in dem Dichtungselement über die Befüllleitung mit Pressluft gefüllt. Dann wird ein Wegeventil geschlossen und somit der Druckraum von der Versorgung mit Pressluft über die Befüllleitung getrennt. Um ein Zeitintervall versetzt wird ein weiteres schaltbares Ventil vor dem Schließen des Wegeventils geöffnet und damit die Überwachungsleitung mit dem Druckraum verbunden. Wenn der Druckraum des Dichtungselements eine Undichtigkeit aufweist, entweicht Pressluft aus diesem und entsprechend wird Pressluft über die Überwachungsleitung in den Druckraum nachströmen. Diese Tatsache des Nachströmens wird mit Hilfe des Strömungswächters ermittelt und über einen Schalter registriert und als elektrisches Signal ausgegeben.

Grundsätzlich muss demnach nach DE 203 19 447 U1 die erwähnte parallel zur Befüllleitung vorgesehene Überwachungsleitung ausgeführt werden. Eine derartige technische Lösung ist für Druckluftarbeitszylinder insbesondere unter Beachtung des jeweiligen Druckluftverbrauchszyklus mit Arbeits- und Rückhub nicht anwendbar.

Weiterhin ist es bekannt, zum Erkennen von Ausfällen bei Dichtungselementen in die jeweilige Befüllleitung ein schaltbares Sperrventil und zwischen Sperrventil und dem mit dem Druckmedium befüllbaren Druckraum ein Manometer zu installieren. Während des Betriebs des Dichtungselements wird dann das Sperrventil geschlossen und am Manometer überprüft, welcher Druckabfall über die Zeit zu beobachten ist. Bei einem zu großen Druckabfall kann auf eine Undichtigkeit des Druckraums bzw. des Dichtungselements geschlossen werden. Problematisch ist hierbei jedoch die Tatsache, dass in der Zeit, in der das Sperrventil geschlossen ist und ein Druckabfall beobachtet wird, das Dichtungselement von der Druckquelle getrennt ist. Für druckluftverbrauchende Objekte wie Druckluftzylinder, Druckluftmotoren oder dergleichen kommt eine Druckabfallprüfung im normalen Betrieb daher nicht in Frage.

Aus dem Vorgenannten ist es daher Aufgabe der Erfindung, eine weiterentwickelte Einrichtung und ein zugehöriges Verfahren zur Überwachung der Dichtigkeit von druckluftverbrauchenden oder druckluftführenden pneumatischen Elementen wie Druckluftzylinder, Druckluftmotoren, Pneumatikventile, Verbindungsteile, Druckluftrohre oder -schläuche oder dergleichen anzugeben, welche bzw. welches auch im normalen Druckluftverbrauchszyklus von Arbeitsgerätschaften eine laufende Kontrolle auf mögliche Leckagen gestattet, wobei insbesondere auch innere Leckagen an pneumatischen Antrieben erfassbar sind.

Die Lösung der Aufgabe der Erfindung erfolgt mit einer Einrichtung gemäß der Merkmalskombination nach Patentanspruch 1 sowie mit einem Verfahren gemäß der Lehre nach Patentanspruch 8, wobei die Unteransprüche mindestens zweckmäßige Ausgestaltungen und Weiterbildungen darstellen.

Bei der Erfindung wird die Erkenntnis genutzt, dass in dem Fall, wenn sich ein pneumatischer Antrieb in einer Endlage befindet, am entlüfteten Anschluss Atmosphärendruck anliegen muss. Im Fall einer Leckage z.B. einer Kolbendichtung eines Arbeitszylinders wird ein Druckausgleich zwischen dem Kolben bzw. Stangenraum mit der Atmosphäre nicht stattfinden, so dass ein Differenzdruck resultiert. Erfindungsgemäß ist die Erkennung dieses Differenzdrucks und eine entsprechende optische, elektrische, akustische oder mechanische Signalisierung Gegenstand der nachstehenden Beschreibung.

Die Erfindung bietet die Möglichkeit der Überwachung bzw. Erkennung von inneren Leckagen an beliebigen pneumatischen Antrieben während deren Einsatz z.B. im Produktionsablauf einer dementsprechenden Vorrichtung.

Zur Umsetzung der Erfindung sind keine maßgeblichen zusätzlichen Bauteile erforderlich, da eine Integration der Ventilanordnung in vorhandene Drosselrückschlagventile möglich ist.

Weiterhin kann die erfindungsgemäße Lösung an jedem beliebigen pneumatischen Antrieb nachgerüstet werden. Eine Beeinflussung der Verfahrbewegung bzw. der Arbeitsmaßnahmen des jeweiligen Druckluftgeräts findet nicht statt.

Es wird demnach von einer Einrichtung zur Überwachung der Dichtigkeit von druckluftverbrauchenden oder druckluftführenden pneumatischen Elementen wie Druckluftzylinder, Druckluftmotoren, Pneumatikventile, Verbindungsteile, Druckluftrohre oder Druckluftschläuche oder dergleichen Mittel ausgegangen, wobei mindestens ein Strömungsventil mit einem diesem zugeordneten Signalgeber vorhanden ist.

Erfindungsgemäß ist der mindestens eine Strömungswächter als Sensor-Rückschlagventil ausgebildet und zwischen Druckluftquelle und Druckluftverbraucher volumenstromdurchlassend angeordnet. Dem Sensor-Rückschlagventil ist ein ebenfalls als Rückschlagventil ausgeführtes Umgehungsventil strömungsseitig antiparallel derart geschaltet, das beim Zuschalten des Druckluftverbrauchers mit Aufbau des Volumenstroms das Sensor-Rückschlagventil öffnet und ein Sensorsignalfluss unterbrochen wird. Am Ende des Druckluftverbrauchszyklus schließt das Sensor-Rückschlagventil, wodurch der Sensorsignalfluss wieder hergestellt ist, wobei im Fall einer Leckage am oder im Druckluftverbraucher durch fortgesetzten Druckluftvolumenstrom der Sensorsignalfluss unterbrochen bleibt und weiterhin im Rückhubabschnitt des Druckluftverbrauchszyklus das Umgehungsventil geöffnet und das Sensor-Rückschlagventil geschlossen ist.

Je nach Anordnung des Signalgebers besteht natürlich auch die Möglichkeit, beim Zuschalten des Druckluftverbrauchers mit Aufbau des Volumenstroms einen Sensorsignalfluss auszulösen und diesen Sensorsignalfluss zu unterbrechen, wenn das Sensor-Rückschlagventil schließt.

Ausgestaltend spricht der Signalgeber des Sensor-Rückschlagventils auf die ventilein- und ventilausgangsseitig vorliegenden Druckgefälle an.

Der Öffnungs- und Schließzustand des Ventilkörpers des Sensor-Rückschlagventils kann elektrisch, optisch, kapazitiv oder induktiv, aber auch mechanisch abgetastet bzw. erfasst werden.

Das Schaltsignal des Signalgebers ist ausgestaltend über eine Logikanordnung bezüglich des Druckluftverbrauchszyklus des jeweiligen Verbrauchers verknüpfbar, wodurch entsprechend der individuellen Ansteuerung des entsprechenden Druckluftverbrauchers auch in einer sehr umfangreichen Pneumatikanlage sofort erkannt werden kann, welches der eingesetzten pneumatischen Elemente fehlerhaft ist bzw. einen zu hohen Druckluft- und damit Energieverbrauch aufweist.

Bei einer Ausgestaltung der Erfindung wird von einem Grundkörper ausgegangen, in dem Strömungskanäle vorgesehen sind. Hierbei ist ein Einlasskanal zu einem Druckquellenanschluss führend ausgebildet und es ist ein Auslasskanal vorhanden, der zu einem Druckluftverbraucheranschluss führt. Zwischen dem Ein- und Auslasskanal ist das Sensor-Rückschlagventil befindlich. Das Umgehungsventil befindet sich zwischen Auslass- und Einlasskanal, um durch letzteres beim Rückhub eines z.B. als Arbeitszylinder ausgebildeten Verbrauchers einen Druckausgleich zu ermöglichen.

Die erfindungsgemäß eingesetzten Ventile können als druckfederbelastete Kugel- oder Kegelsitzventile ausgeführt werden.

Bei dem erfindungsgemäßen Verfahren zur Überwachung der Dichtigkeit von druckluftverbrauchenden oder druckluftführenden pneumatischen Elementen wie z.B. Druckluftzylindern oder Druckluftmotoren mit mindestens einem Strömungswächter und einem diesen zugeordneten Signalgeber erfolgt beim Zuschalten des Druckluftverbrauchers mit Aufbau des Volumenstroms ein Öffnen des Sensor-Rückschlagventils, so dass ein Sensorsignalfluss unterbrochen wird. Am Ende des Druckluftverbrauchszyklus schließt das Sensor-Rückschlagventil, wodurch der Sensorsignalfluss wieder hergestellt wird. Im Fall einer Leckage am oder im Druckluftverbraucher durch fortgesetzten Druckluftvolumenstrom bleibt der Sensorsignalfluss unterbrochen, so dass auf eine Undichtigkeit geschlossen werden kann. Im Rückhubabschnitt des Druckluftverbrauchszyklus öffnet das Umgehungsventil und das Sensor-Rückschlagventil bleibt geschlossen, so dass die Funktionsfähigkeit der druckluftverbrauchenden Einrichtung oder der Elemente vollständig erhalten bleibt. Eine Betriebsunterbrechung oder irgendein Umschaltvorgang, wie aus dem Stand der Technik bekannt, sind nicht erforderlich.

Die Erfindung soll nachstehend anhand eines Ausführungsbeispiels sowie unter Zuhilfenahme von Figuren näher erläutert werden.

Hierbei zeigen:
- Fig. 1: eine Prinzipdarstellung der erfindungsgemäßen Einrichtung zur Überwachung der Dichtigkeit von druckluftverbrauchenden oder druckluftführenden pneumatischen Elementen und
- Fig. 2: eine Draufsicht, eine Seitenansicht, einen Schnitt längs der Linie A-A sowie einen Schnitt längs der Linie B-B gemäß Draufsicht und Seitenansicht auf eine beispielhafte Einrichtung zur DichtigkeitsÜberwachung, ausgebildet als Grundkörper mit Kanälen und eingesetzten Ventilen sowie Steckanschluss für die Druckluftquelle und Steckanschluss zum Druckluftverbraucher.

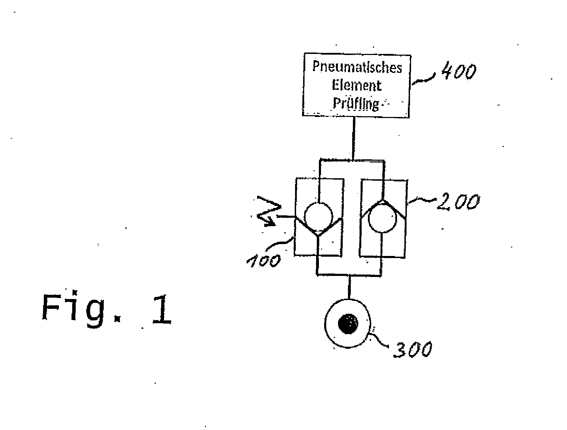

Wie in der Fig. 1 erkennbar, umfasst die erfindungsgemäße Einrichtung ein Sensor-Rückschlagventil 100, dem ein Umgehungsventil 200 strömungsseitig antiparallel geschaltet ist. Die antiparallele Anordnung aus Sensorventil 100 und Umgehungsventil 200 befindet sich zwischen einer Druckluftquelle 300 und einem pneumatischen Element bzw. Verbraucher 400.

Sensorventil und Umgehungsventil sind bevorzugt als Rückschlagventile einfacher Bauform realisierbar.

Beim Zuschalten des Druckes über die Druckquelle baut sich ein Volumenstrom von der Druckluftquelle und die Zuluftkammer eines beispielsweise als Druckluftzylinder ausgebildeten pneumatischen Elements 400 auf. Das Sensorventil 100 ist geöffnet und das Umgehungsventil 200 geschlossen. Der Signalgeber (nicht gezeigt) im Sensorventil 100 ist geöffnet, so dass der Signalfluss unterbrochen ist.

Durch die Druckluftbeaufschlagung verfährt der das pneumatische Element 400 bildende Antrieb bei konstantem Druckluft-Volumenstrom. Das Sensorventil 100 bleibt weiterhin geöffnet und das Umgehungsventil 200 weiterhin geschlossen sowie der Signalfluss unterbrochen.

Nach Abschluss der Bewegung des Druckluftzylinders muss bei voller Funktionsfähigkeit desselben der Volumenstrom mit hoher Dynamik auf Null absinken. Hier ergibt sich ein Schließen des Sensorventils 100 bei geschlossenem Umgehungsventil 200. Durch das geschlossene Sensorventil 100 wird auch der Signalgeber (nicht gezeigt) in den geschlossenen Zustand überführt, so dass der Signalfluss wieder hergestellt ist.
Im Fall einer Leckage, insbesondere einer inneren Leckage im Druckluftzylinder bzw. dem entsprechenden Antrieb kommt es nicht zu einem Abfall des Volumenstroms bei Erreichen der Endlage. Der Signalgeber im Sensorventil 100 schließt nicht, wodurch der Fehlerfall, z.B. optisch, anzeigbar ist. Es ist also das Sensorventil 100 in diesem Fall geöffnet, das Umgehungsventil 200 geschlossen und der Signalfluss unterbrochen.

Im Rückhub-Druckluftverbrauchszyklusschritt ist das Sensorventil 100 geschlossen, das Umgehungsventil 200 geöffnet und der Signalfluss durch den Signalgeber vorhanden.

Mit der vorstehend erläuterten Verfahrensweise gelingt es, eine Leckage durch strömendes Fluid auf der Zuflussseite zu ermitteln. Wenn auf beiden Seiten des Sensorventils der gleiche Druck, beispielsweise Betriebsdruck vorliegt, ergibt sich kein Druckgefälle und somit kein Volumenstrom, was vom Sensorsignalgeber erfassbar ist. Im Falle einer Leckage existiert ein Druckgefälle, so dass ein Volumenstrom vom hohen zum niedrigen Druckniveau entsteht, was vom Signalgeber ebenfalls erfass- und darstellbar ist.

Es sei an dieser Stelle darauf hingewiesen, dass zur kostengünstigen Realisierung von Bewegungen mit hohen Geschwindigkeiten, hohen Taktzeiten sowie mittleren Kräften insbesondere auch in explosionsgeschützten und chemisch aggressiven Bereichen in vielen Fällen pneumatische Arbeitszylinder eingesetzt werden. Bei Zylindern mit sehr hohen Taktzeiten und einer damit verbundenen höheren Belastung der Kolbendichtungen kann es zu einem erhöhten Verschleiß und damit einer inneren Leckage kommen.

Ein Pneumatikzylinder wird insbesondere auch noch dann als funktionsfähig definiert, wenn er ausschließlich seine mechanische Funktion erfüllt. Diese Betrachtungsweise ist aus energetischen Gesichtspunkten problematisch.

Innere Leckagen können dazu führen, dass dem Druckluftkreislauf wesentlich mehr Energie entzogen wird als zur Realisierung der Arbeitsaufgabe erforderlich.

Aufgrund dessen muss der Drucklufterzeuger mehr Arbeit leisten, um den erhöhten Druckluftbedarf zu kompensieren, was eine unmittelbare Erhöhung der Energie- und Betriebskosten nach sich zieht.

Da die Bereitstellung von Druckluft als teuerste Form der Energieumwandlung gilt und ca. 50% der Gesamtbetriebskosten einer entsprechenden Anlage ausmacht, ist eine frühzeitige Erkennung von Leckagen aus energetischer Sicht unabdingbar, wofür die hierfür vorgestellte Lösung besondere Vorteile bietet.

Im Gegensatz zu hydraulischen Zylindern wird eine innere Leckage bei Pneumatikzylindern entweder gar nicht oder nur in sehr seltenen Fällen entdeckt. Bei hydraulischen Zylindern macht sich eine innere Leckage durch eine starke Erwärmung des Druckmittels sowie eine Leistungsverminderung bemerkbar. Bei pneumatischen Antrieben kann keine Erwärmung der Druckluft gemessen werden, da diese permanent mit der Umgebung ausgetauscht wird. Auch eine Verminderung der Leistungsfähigkeit ist kein geeigneter Indikator, da im Regelfall immer genügend Druckluft aus der Druckluftquelle zur Verfügung steht.

Existiert in einem oder mehreren vorhandenen Antrieben eine Leckagestelle, konnte diese bisher nur durch kostenintensive messtechnische manuelle Untersuchungen nachgewiesen werden, wofür im Regelfall auch eine Betriebsunterbrechung erforderlich war. Auch eine akustische Lokalisierung einer Leckage ist nur schwer möglich, da bei vielen Anwendungen eine große Zahl pneumatischer Antriebe gleichzeitig arbeitet und intensive Abluftgeräusche erzeugt.

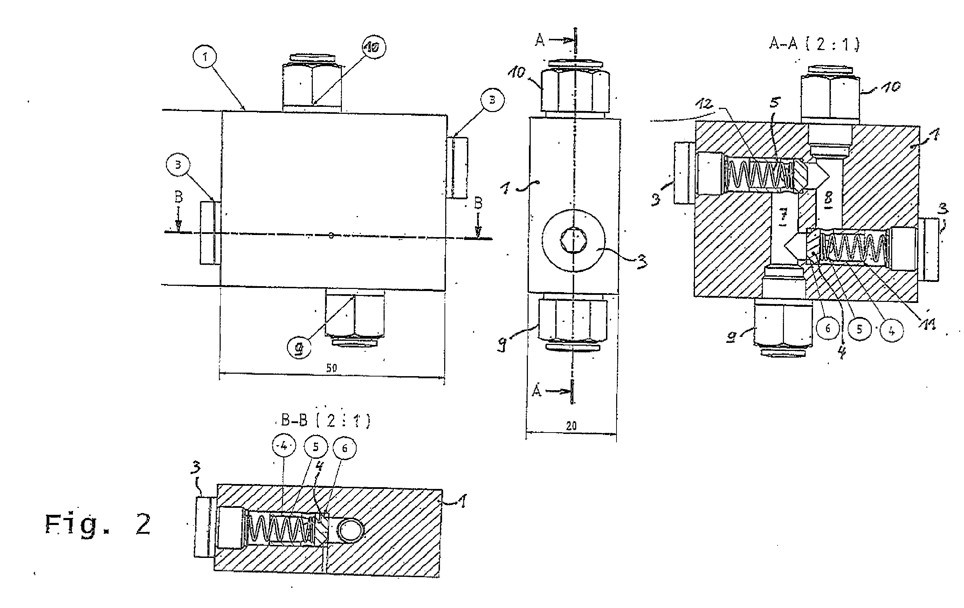

Die Darstellungen nach Fig. 2 zeigen eine mögliche Ausführungsform eines Nachrüst-Bausteins zur Überwachung der Dichtigkeit von druckluftverbrauchenden oder druckluftführenden pneumatischen Elementen.

Bei diesem Baustein wird von einem Grundkörper 1, z.B. aus einem Kunststoffmaterial, ausgegangen.

Im Grundkörper 1 ist ein Einlasskanal 7 und ein Auslasskanal 8 als Strömungskanal eingebracht. Der Einlasskanal 7 steht mit einem Druckquellenanschluss 9, z.B. ausgebildet als üblicher Steckanschluss, in Verbindung.

Der Auslasskanal 8 führt zu einem Druckluftverbraucheranschluss 10, der auch als Steckanschluss ausgeführt werden kann.

Zwischen dem Einlasskanal 7 und dem Auslasskanal 8 ist das erfindungsgemäße Sensor-Rückschlagventil 11 befindlich.

Das Sensorventil 11 weist einen Zylinder mit Kegelspitze 4 auf, um bezüglich des zugeordneten Ventilsitzes eine Absperrfunktion zwischen dem Einlasskanal 7 und dem Auslasskanal 8 zu erfüllen.

Bei einer Variante zur Realisierung eines Signalgebers ist eine Kontaktscheibe 6 im Bereich des Ventilsitzes des Sensorventils 11 vorhanden. Über eine Kontaktgabe zwischen dem Ventilkegel 4 und der Scheibe 6 kann ein einfacher Schalter realisiert werden, der je nach Stellung des Ventilkegels geöffnet oder geschlossen ist.

Im oberen Abschnitt gemäß der Schnittdarstellung längs der Linie A-A nach Fig. 2 ist das Umgehungsventil 12 befindlich, welches vom Aufbau her analog dem Sensor-Rückschlagventil 11 aufgebaut ist und ein federbelastetes Kegelventil darstellt. Zum Einsatz kommt beispielsweise eine Druckfeder 5. Über seitliche Kappen 3, die am Grundkörper 1 über eine Verschraubung befestigt werden können, besteht Zugang zu den Ventilen 11 und 12 zum Zweck der Montage bzw. des Austausches selbiger.

Wird über den Anschluss 9 Druckluft zugeführt und ist am Anschluss 10 ein Verbraucher angeschlossen, baut sich ein Volumenstrom von der Druckluftquelle zur Druckluftsenke auf. Es kommt hierbei zu einem Öffnen des Sensorventils. Der Ventilkegel 4 bewegt sich dabei gemäß der zeichnerischen Darstellung gemäß Fig. 2 nach rechts und gibt den Verbindungsabschnitt zwischen dem Einlasskanal 7 und dem Auslasskanal 8 frei.

Durch die Öffnung des Sensorventils 11 wird auch der Schalter, gebildet aus Ventilkegel 4 und Scheibe 6, geöffnet und ein entsprechender Signalfluss unterbrochen. Der am Steckanschluss 10 als Verbraucher angeschlossene Antrieb verfährt bei konstantem Volumenstrom. Das Sensorventil bleibt während dieser Verfahrbewegung geschlossen. Das Umgehungsventil 12 ist ebenfalls geschlossen.

Wenn die Bewegung des angeschlossenen Arbeitszylinders beendet ist, sinkt der Volumenstrom mit hoher Dynamik auf Null. Hierdurch ergibt sich ein Schließen des Sensorventils 11. Das Umgehungsventil 12 ist ebenfalls geschlossen. Mit dem Schließvorgang des Sensorventils 11 wird auch der Signalgeber, gebildet durch den Schalter mit den Elementen 4 und 6, geschlossen.

Wenn eine innere Leckage im angeschlossenen Verbraucher vorliegt, kommt es nicht zum ansonsten gewünschten Abfall des Volumenstroms in der Endlage des z.B. Arbeitszylinders. Dies bedeutet, dass bedingt durch die weitere Druckluftzufuhr das Sensorventil 11 offen bleibt, was durch den Signalgeber erkennbar ist.

Im Fall des Rückhubs des Arbeitszylinders kommt es zu einem Schließen des Sensorventils 11 und zu einem Öffnen des Umgehungsventils 12. Die volle Funktionsfähigkeit der entsprechenden pneumatischen Elemente bleibt durch die vorgesehene Einrichtung zur Überwachung der Dichtigkeit gewährleistet.

## Patentansprüche

1. Einrichtung zur Überwachung der Dichtigkeit von druckluftverbrauchenden oder druckluftführenden pneumatischen Elementen wie Druckluftzylinder, Druckluftmotoren, Pneumatikventile, Verbindungsteile, Druckluftrohre und - schläuche oder dergleichen mit mindestens einem Strömungswächter und einem diesem zugeordneten Signalgeber,
**dadurch gekennzeichnet, dass**
der mindestens eine Strömungswächter als Sensor-Rückschlagventil (100; 11) ausgebildet und vorzugsweise zwischen Druckluftquelle (300) und Druckluftverbraucher (400) volumenstromdurchlassend angeordnet ist, wobei dem Sensor-Rückschlagventil (100) ein ebenfalls als Rückschlagventil ausgeführtes Umgehungsventil (200) strömungsseitig antiparallel derart geschaltet ist, dass beim Zuschalten des Druckluftverbrauchers (400) mit Aufbau des Volumenstroms das Sensor-Rückschlagventil (100) öffnet und ein Sensorsignalfluss unterbrochen wird, am Ende des Druckluftverbrauchszyklus das Sensor-Rückschlagventil (100) schließt, wodurch der Sensorsignalfluss wieder hergestellt ist, wobei im Fall einer Leckage am oder im Druckluftverbraucher (400) durch fortgesetzten Druckluft-Volumenstrom der Sensorsignalfluss unterbrochen bleibt und weiterhin im Rückhubabschnitt des Druckluftverbrauchszyklus das Umgehungsventil (200) geöffnet und das Sensor-Rückschlagventil (100) geschlossen ist.

2. Einrichtung nach Anspruch 1,
**dadurch gekennzeichnet, dass**
der Signalgeber des Sensor-Rückschlagventils (100) auf die ventilein- und ventilausgangsseitig vorliegenden Druckgefälle anspricht.

3. Einrichtung nach Anspruch 1 oder 2,
**dadurch gekennzeichnet, dass**
der Öffnungs- und Schließzustand des Ventilkörpers des Sensor-Rückschlagventils (100) elektrisch, optisch, kapazitiv oder induktiv erfassbar ist.

4. Einrichtung nach einem der vorangegangenen Ansprüche,
**dadurch gekennzeichnet, dass**
das Schaltsignal des Signalgebers über eine Logikanordnung bezüglich des Druckluftverbrauchszyklus des jeweiligen Verbrauchers verknüpft ist.

5. Einrichtung nach einem der vorangegangenen Ansprüche,
**dadurch gekennzeichnet, dass**
in einem Grundkörper (1) Strömungskanäle vorgesehen sind, wobei ein Einlasskanal (7) zu einem Druckluftquellenanschluss (9) und ein Auslasskanal (8) zu einem Druckluftverbraucheranschluss (10) führt, weiterhin zwischen Ein- und Auslasskanal (7; 8) das Sensor-Rückschlagventil (11) befindlich ist und sich das Umgehungsventil (12) zwischen Auslass- und Einlasskanal (7; 8) befindet, um durch letzteres beim Rückhub eines z.B. als Arbeitszylinder ausgebildeten Verbrauchers einen Druckausgleich zu ermöglichen.

6. Einrichtung nach einem der vorangegangenen Ansprüche,
**dadurch gekennzeichnet, dass**
die Ventile als druckfederbelastete Kugel- oder Kegelsitzventile ausgebildet sind.

7. Einrichtung nach Anspruch 6,
**dadurch gekennzeichnet, dass**
der Signalgeber über einen elektrischen Schaltkontakt im Bereich des Ventilsitzes realisiert ist.

8. Einrichtung nach einem der vorangegangenen Ansprüche,
**dadurch gekennzeichnet, dass**
das Sensor-Rückschlagventil (100) alternativ zwischen Druckluftverbraucher und Atmosphäre angeordnet ist.

9. Verfahren zur Überwachung der Dichtigkeit von druckluftverbrauchenden oder druckluftführenden pneumatischen Elementen wie Druckluftzylinder, Druckluftmotoren, Pneumatikventile, Verbindungsteile, Druckluftrohre und Druckluftschläuche oder dergleichen mit mindestens einem Strömungswächter und einem diesem zugeordneten Signalgeber gemäß einem der vorangegangenen Ansprüche,
**dadurch gekennzeichnet, dass**
beim Zuschalten des Druckluftverbrauchers mit Aufbau des Volumenstroms ein Sensor-Rückschlagventil öffnet und ein Sensorsignalfluss unterbrochen wird, am Ende des Druckluftverbrauchszyklus das Sensor-Rückschlagventil schließt, wodurch der Sensorsignalfluss wieder hergestellt ist, wobei im Fall einer Leckage am oder im Druckluftverbraucher durch fortgesetzten Druckluft-volumenstrom der Sensorsignalfluss unterbrochen bleibt und weiterhin im Rückhubabschnitt des Druckluftverbrauchszyklus das Umgebungsventil geöffnet und das Sensor-Rückschlagventil geschlossen ist.
